# EUROPEAN PATENT APPLICATION

(11) **EP 2 725 719 A1**
(43) Date of publication of application: **30.04.2014**
(21) Application number: 13190388.2
(22) Date of filing: 25.10.2013
(51) Int. Cl.: H04B 5/00, H01Q 19/09, H04N 21/214

(54) **Near field communication apparatus**

(30) Priority: 26.10.2012 NZ 60326612
(71) Applicant: Phitek Systems Limited, Auckland 1023 (NZ)
(72) Inventor: Greig, Nigel, 1022 Auckland (NZ); Dublon, Hamish, 1072 Auckland (NZ)
(74) Representative: Brannen, Joseph Waclaw

(57) **Abstract**

The present invention provides a near field communication (NFC) apparatus comprising an insert for installation in a cut-out of a panel or housing, the insert comprising a first portion adapted to extend through the cut-out and a second portion comprising a flange adapted to abut the panel or housing adjacent the cut-out, wherein the flange comprises an NFC antenna. The flange thus serves the purposes of securing the apparatus in place, providing a discrete cosmetic finish concealing and protecting the antenna, and housing an antenna of larger area than otherwise possible to allow improved communications range.

## Description

### Field of the Invention

This invention relates to apparatuses to facilitate wireless communications, and more particularly to near field communications. The invention has particularly suited for integration with in-flight entertainment (IFE) systems, but is not necessarily limited to this application.

### Background

Near field communications (NFC) schemes allow communications over short distances, usually over a few centimetres or so. These communication schemes use short range electromagnetic coupling (primarily inductive coupling) for transferring power and/or data.

In some examples near field communications are used to facilitate communication between a mobile device such as a mobile telephone and a point of sale terminal, or between a smart card and a smart card reader.

Near field communications are increasingly being used for a number of applications, so near field communication functionality is increasingly being required in a number of different situations. One such situation is a personal computer or communications environment. One example would be interaction with a personal computer. Another example is an environment where a user interacts with a communications system such as an in-flight entertainment system in an aircraft.

The reference to any prior art in the specification is not, and should not be taken as, an acknowledgement or any form of suggestion that the prior art forms part of the common general knowledge in any country.

### Object of the Invention

It is an object of the present invention to provide an apparatus which will at least go some way toward overcoming disadvantages of existing near field communication apparatuses, or which will at least provide a useful alternative.

Other objects of the present invention may become apparent from the following description, which is given by way of example only.

### Brief Summary of the Invention

In one aspect the invention may broadly be said to consist in a near field communication (NFC) apparatus comprising an insert for installation in a cut-out of a panel or housing, the insert comprising a first portion adapted to extend through the cut-out and a second portion comprising a flange adapted to abut the panel or housing adjacent the cut-out, wherein the flange comprises an NFC antenna.

In a second aspect the invention broadly provides a component apparatus for a device, housing or panel, the apparatus including a near field communications antenna and means to physically connect the apparatus to the housing or panel.

In one embodiment the component apparatus comprises an electronic device. In another embodiment the component primarily, or only, has the function of providing an antenna.

In one embodiment the apparatus comprises an insert and the shape of the insert provides the connection means to physically connect or engage the apparatus with the cut-out in the housing or panel. In another embodiment the apparatus attaches to the housing or panel without requiring a cut-out. Preferably an aperture is provided in the housing or panel for a conductor or conductors to communicate a signal from the antenna to the electronic device.

In one aspect of the invention the apparatus performs a communication function other than near field communications. For example, the apparatus may comprise a jack for wired connection to a device.

In one embodiment of the invention an outer layer of plastics material is provided over the antenna. The plastics material is preferably of substantially constant thickness. Alternatively the thickness of the material covering the antenna is non-uniform. Preferably the thickness or contour of the material covering the antenna is selected such that the resultant varied material dielectric along the transmission plane has a desired effect on the shape of transmission/reception field.

In one embodiment of the invention an outer layer comprising a plurality of plastics material is provided over the antenna. Preferably one of said plurality of plastics materials comprises a material having a different dielectric property from at least one other of the plurality of plastic materials. Preferably the type, shape and position of the materials covering the antenna are selected to have a desired effect on the shape of transmission/reception field.

In one embodiment the apparatus includes near field communication circuitry. In another embodiment near field communication circuitry is provided in the housing or panel to which the component apparatus is connected and is adapted to be connected to the antenna.

In one aspect of the invention the apparatus includes a flange and the antenna is provided in or on the flange. In one embodiment the antenna is provided on the rear surface of the flange so as to be cosmetically hidden behind the flange in use.

In one embodiment in which the apparatus comprises an insert, a latch is provided for locking the insert into the cut-out in the housing or panel.

In some embodiments an electromagnetic absorbent material may be provided on or adjacent to the antenna in order to modify an induced magnetic field in the vicinity of conductors.

In one embodiment the electromagnetic absorbent material may comprise ferrite. The antenna may be provided on a thin film substrate such as a flex circuit substrate. Electromagnetic absorbent material may be provided in the form of adhesive tape. For example, ferrite adhesive backed tape.

In one embodiment the antenna comprises a plurality of loops which may cross over each other or be formed in a spiral.

In another aspect of the invention the antenna is shaped to compensate for the effects of conductors present in the housing or panel which may affect the field of transmission or reception of the antenna. For example, the antenna may be asymmetric in terms of the shape and/or position of the one or more loops of the antenna. In another example, the conductive paths in the antenna may be increased or widened or more widely spaced apart in selected regions of the antenna so as to increase or reduce the available field to compensate for conductive objects.

In another embodiment an electromagnetic reflector is used in order to avoid unwanted interference of a conductive object with the field of transmission or reception of the antenna.

The invention may also be said broadly to consist in the parts, elements and features referred to or indicated in the specification of the application, individually or collectively, in any or all combinations of two or more of said parts, elements or features, and where specific integers are mentioned herein which have known equivalents in the art to which the invention relates, such known equivalents are deemed to be incorporated herein as if individually set forth.

Other aspects of the invention will become apparent from the following description.

### Brief Description of the Drawings

One or more embodiments of the invention will be described below with reference to the accompanying drawings in which:
**Figure 1** is a partial diagrammatic side elevation in cross section of an apparatus such as an electronic device according to the present invention, mounted in an aperture in a panel or housing;
**Figure 2** is a front elevation of the arrangement shown in Figure 1;
**Figure 3** is partial side elevation in cross section of a second embodiment of an apparatus according to the present invention, mounted in an aperture in a panel or housing such as a panel in an aircraft passenger seat;
**Figure 4** is a front elevation of the arrangement shown in Figure 3;
**Figure 5** is a partial side elevation in cross section showing detail of an antenna arrangement for use in the constructions shown in the preceding Figures;
**Figure 6** is a further view of Figure 3, showing greater detail;
**Figure 7** is a partial diagrammatic side elevation in cross section of apparatus including a near field communication antenna mounted on a panel or housing;
**Figure 8** is a partial diagrammatic side elevation in cross section of a further embodiment of apparatus including a near field communication antenna mounted on a panel or housing;
**Figure 9** is a diagrammatic elevation in cross section showing another embodiment in which apparatus including a near field antenna is attached exteriorly to a housing or panel;
**Figure 10** is a diagrammatic elevation in cross section illustrating one example of an implementation of the apparatus of the preceding Figures and in particular to the apparatus of Figures 1 to 8;
**Figure 11** is a partial diagrammatic side elevation in cross section of a further embodiment of an apparatus including a near field communication antenna mounted on a panel or housing;
**Figure 12** is a partial diagrammatic side elevation in cross section of a still further embodiment of an apparatus including a near field communication antenna mounted on a panel or housing; and
**Figure 13** is an isometric view of yet another embodiment of an NFC apparatus according to the present invention.

### Detailed Description of one or more Embodiments

Throughout the description and drawings, like reference numerals are used to refer to similar features in different embodiments.

While near field communications (NFC) have previously been incorporated into a range or seemingly-small devices such as mobile telephones and contactless payment cards, in reality this is only possible because such devices provide a reasonably large and flat area which can accommodate a substantially planar antenna of the required size. In particular, the antenna may need to have a diameter of at least 5 cm to meet range and/or payment certification requirements, for example. The inventors have realised that there other potential environments in which NFC communications may also be desirable, but due to space and/or access limitations such an antenna cannot be easily provided, in particular upon retrofitting the antenna to an existing system. In-flight entertainment (IFE) systems are one such example.

In-flight entertainment systems are now commonplace on commercial passenger aircraft. Modern IFE systems generally comprise at least a personal video screen and audio interface provided in each seat of the aircraft, which communicate with and receive content from a single central IFE computer system. Due to the extensive wiring and configuration of the aircraft cabin required upon installation or replacement of such an IFE system, IFE systems are generally installed upon initial fit-out of the aircraft before the aircraft is commissioned for passenger service, and replaced or significantly upgraded only infrequently thereafter, if at all. Accordingly, IFE systems run the risk of becoming obsolete as technology evolves along with passenger and airline requirements, and many existing IFE systems lack NFC capabilities.

Installation of an NFC antenna and associated hardware in an aircraft has not previously been practical as the NFC hardware needs to be integrated into existing hardware or in existing hardware locations which are convenient for use by passengers. Aircraft seating manufacturers for example do not typically make much more than a cursory allowance for IFE hardware. It is up to the IFE hardware manufacturer or a third party provider to make the equipment fit well. When retrofitting components in particular it is preferable not to require any significant dismantling or modification of the aircraft fit-out, as this is considerably more time consuming, complex, and expensive (particularly taking into consideration the loss of revenue while the aircraft is out of commission for upgrades).

Passenger interfaces such as connectors and buttons in IFE systems are commonly subjected to heavy and/or rough use, and may therefore fail or require periodic preventative replacement. Similarly, certain connectors may eventually become obsolete and require replacement or upgrade. Such interfaces may therefore be provided as a removable device in a cut-out in the aircraft cabin at or adjacent each passenger seat. This also provides the opportunity to add new functionality by retrofitting an additional interface in a spare cut-out, or replacing an existing interface occupying a cut-out. However, such cut-outs are generally sized to accommodate only relatively small jacks (e.g. a standard aircraft audio connector comprising a triangle of two 3.5mm audio sockets and one 2.5mm socket, with an overall area of roughly 1"x1") and have therefore not previously been considered for providing an antenna of sufficient size (e.g. greater than 5 cm or roughly 2" in diameter) to enable wireless communication.

Although the present invention is in particular described by way of example with reference to considerations which apply to in-flight entertainment (IFE) systems, it will be appreciated that similar considerations may also apply in other applications and the present invention is not necessarily limited to this particular field.

When providing a wireless communication feature in any system, it is important that the communications range is adequate to meet the requirements or expectations of the user. This is particularly so for near field communications which has a very limited range. In the context of an IFE system, for example, it is preferable that near-field communication is operable by a passenger seated in the vicinity of the NFC transponder/antenna, so that communications between the IFE system and the passenger's device are reliable and convenient. However, as the NFC field range is dependent on the area of the antenna, the size of a cut-out (which may be roughly 1"x1", for example) in the aircraft cabin is generally insufficient to accommodate an adequately-sized antenna (which may be more than 2" in diameter, for example) to ensure the required NFC range and reliability.

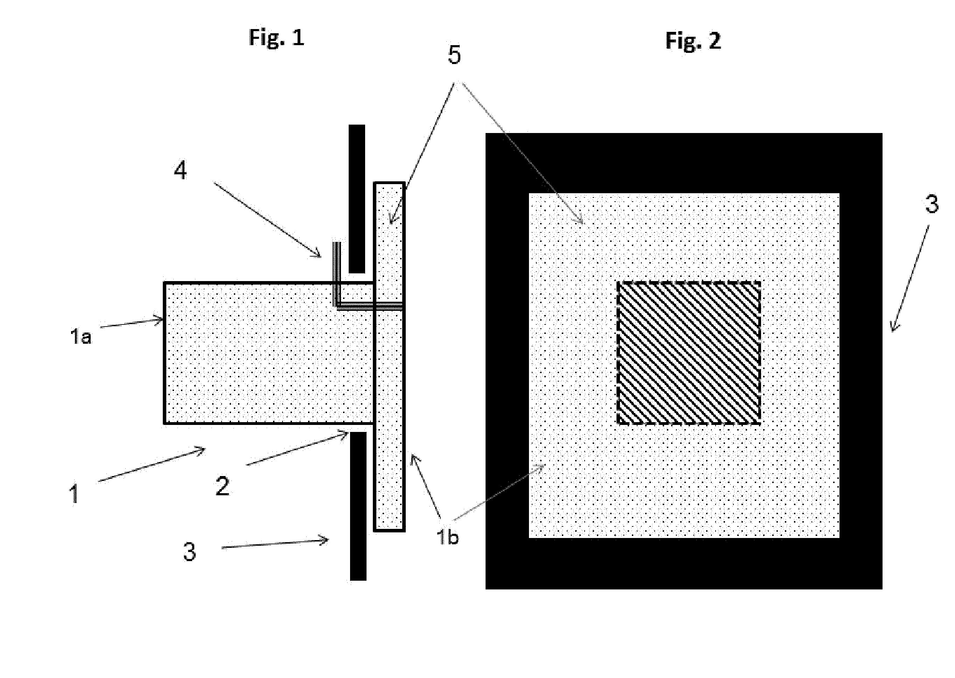

Referring first to Figures 1 and 2, an apparatus according to the present invention is shown in the form of an insert 1 which is provided in a cut-out 2 of a panel or housing 3. In particular, in this embodiment the insert 1 comprises a first portion 1a which is inserted substantially through the cut-out 2 to project into the interior of the panel or housing, and a second portion 1b adapted to abut the external side of the panel 3 adjacent the cut-out 2. The second portion 1b may be relatively broad and flat to lie close to the external surface of the panel.

In this example the insert 1 comprises an NFC insert module, but in other embodiments the insert may additionally comprise a jack or a socket (not shown) in the central area which in one example can allow a user to connect a headset, personal media player, laptop or other similar device dependent on the type of jack provided, for either or both of communication or power purposes. In such cases, the NFC insert module may thus replace an existing interface having the same type of jack, which may be particularly desirable for addition to systems having no spare cut-outs available.

In the example shown, the module communicates with an in-flight entertainment (IFE) system, and the panel or housing 3 comprises apparatus such as a housing for a visual display unit, or a part of an aircraft cabin fit-out, for example a cabin panel, seat, part of an armrest, part of a Visual Display Unit (VDU) surround or similar panel or housing or enclosure which is accessible to the user. Depending upon the particular panel or housing, the antenna may be sized and shaped whereby it forms a loop about a VDU, jack, or other device occupying a cut-out.

In the embodiment illustrated in Figure 1 the insert 1 is placed within the cut-out 2 and then locked in place using a pawl latch 4.

As can be seen from Figures 1 and 2, part of the structure of the insert 1 is a non-conductive protruding fascia or flange 5 which overlaps and extends beyond the periphery of the cut-out 2, providing: a) a clean and discrete cosmetic finish; and b) a means, together with pawl 4, to lock the insert in place relative to the housing or panel 3. The flange 5 in particular preferably abuts the external side of the panel 3 about the cut-out 2. The pawl 4 preferably abuts the opposing internal side of the panel 3, while the sides of the first portion 1a abut the edges of the cut-out 2 to lock the apparatus in position. Alternatively, the insert may be attached to the panel with an adhesive between the panel and flange. Such an adhesive attachment may in particular be sufficient or preferred in the case of an insert which provides solely wireless connectivity, as opposed to also providing a jack for wired connection with a plug which may be repeatedly subjected to tension in the co-axial and/or transverse directions.

The flange 5 also provides a region, either within the structure of the flange itself, or more preferably on a rear surface of the flange, on which a near field antenna is provided. In the preferred embodiment the antenna takes a form of at least one loop of conductive material, but may comprise multiple turns of conductive material, the turns overlapping each other for example, or alternatively the turns being provided in the form of a spiral.

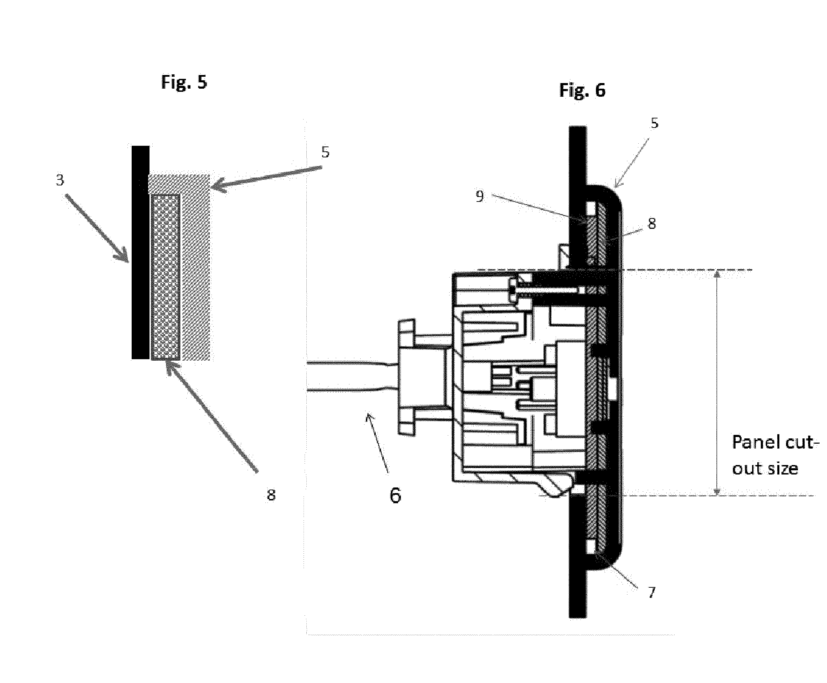

If the near field antenna is provided on a rear surface of the flange 5 i.e. a surface of flange 5 which faces the panel or housing 3, then the near field antenna may be adhered to that rear surface in one embodiment of the invention. In other embodiments of the invention, the near field antenna is placed within a recess in the flange 5 (see Figures 5 and 6), or is integrally moulded within the flange 5. The near field antenna may be provided on a suitable substrate material such as a flex circuit substrate for example, or may be a conductive wire. The antenna has appropriate electrical connections which are accessible either on the insert 1, or accessible at an internal part of the housing or panel 3 for connection to communication circuitry.

The flange 5 thus conceals and protects a loop antenna of larger diameter (with respect to the size of the cut-out 2) providing improved communications range and reliability, while simultaneously locking or securing the apparatus in place in the panel or housing 3.

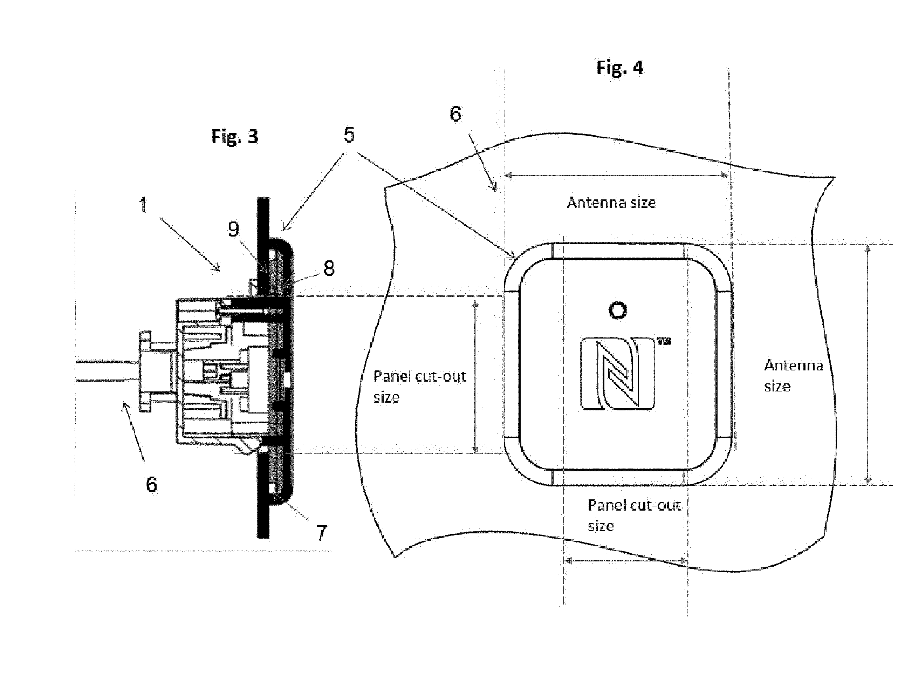

Turning to Figures 3 and 4, a further example of an apparatus according to the present invention is illustrated. Figures 3 and 4 will be described in conjunction with Figures 5 and 6 which show the construction in greater detail. As can be seen from the figures, the flange 5 in this embodiment defines a recess 7 which accommodates the antenna 8. A layer of protective material may also be provided as layer 9, and this layer may comprise a material which is either physically protective or electromagnetically protective. Thus for example, layer 9 may comprise a thin layer of foam or plastic for example which physically protects the antenna layer during installation and removal of the insert 1.

A further consideration in ensuring that the near-field communications range is sufficient is the presence of any metal or other conductive materials which may adversely affect the shape of the NFC field.

The material 9 between the antenna 8 and any metallic fastener 10 or other metallic components inside the housing 3 (or the apparatus itself) may therefore alternatively comprise an electromagnetically absorbing material (i.e. having a relatively high magnetic permeability) such as a ferrite material. For example in one embodiment the ferrite material may be provided as an adhesive tape which is loaded with ferrite powder or a similar material, such as the 3M™ AB-5000 series EMI absorbers. In another embodiment, the layer 9 may comprise a layer of material which is electromagnetically reflective so as to ensure that electromagnetic radiation being produced by the antenna is directed outwards externally away from the panel or housing 3.

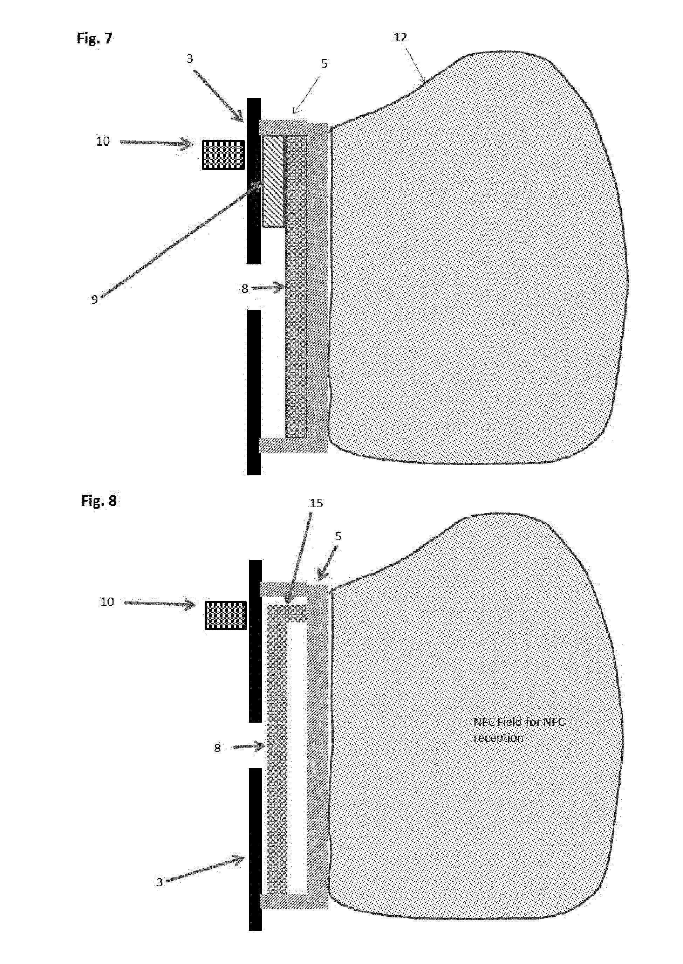

The purpose of having layer 9 as an electromagnetically insulating material, an electromagnetically absorbent material or an electromagnetically reflective material is to avoid any unwanted absorption or changes in field strength or shape caused by conductors which are in the vicinity of the antenna. To this end, the layer 9 may take forms other than that shown in Figure 6. Therefore, for example referring to Figure 7, the layer 9 may be provided in a small area to shield the antenna from an electrically conductive material such as a metallic fastener 10 in the housing 3.

The apparatus preferably further comprises, or is adapted to receive, a cable 6 extending rearwardly from the apparatus for connecting the antenna to remotely-provided NFC circuitry, or to the IFE system if the necessary NFC circuitry is integrated into the apparatus itself. The cable may be permanently connected or hardwired (e.g. soldered) to the apparatus, or may alternatively be removably connected wherein the apparatus comprises a connector for receiving a corresponding connector of the cable.

In the illustrated embodiment, the housing of the insert/apparatus comprises a two-piece construction secured together by a screw. In other embodiments, the housing may

In Figure 7, the NFC transmission/reception field is shown by way of example as region 12 extending away from the housing or panel 3. Layer 9 of electromagnetically absorbent material assists in shielding the effect of the metallic fastener 10, thus allowing the antenna to compensate for the effect of the fastener, so that an effective field is still available exteriorly of the housing 3 in the vicinity of the fastener 10. In other embodiments, layer 9 may alternatively, or additionally, be adapted to compensate for the effect of any conductors in the apparatus itself, such as any conductive components of an additional audio jack for example.

Referring now to Figure 8 another embodiment is shown in which instead of the layer 9 (or in addition to layer 9 if desired) the antenna 8 has a geometry that allows the antenna to compensate for the presence of the electrically conductive fastener 10. In other embodiments, the geometry of the antenna 8 may be adapted to compensate for the effect of any conductive components of the apparatus itself. The geometry is indicated by region 15 of the antenna. Region 15 is indicative only, as the variation in antenna structure may take a variety of forms. Although the variation in geometry is shown in Figure 8 as being present in the vicinity of the fastener 10, the variation in geometry may occur in another region of the antenna, or may be distributed over a greater region of the antenna, or even the entire antenna design.

In one example, region 15 may comprise a variation in the distance between adjacent turns of the antenna e.g. reducing or increasing the distance between turns in one region of the antenna to compensate for the presence of the electrically conductive material. In another embodiment, the width of the conductor that forms the antenna may be varied. In yet another embodiment, if the antenna is provided on a planar substrate, then the angle of the substrate can be varied. For example the antenna may be provided in a plane perpendicular to the housing 3 where the antenna is near the fastener 10, but at other locations the antenna may be provided in the same plane as housing 3. In another example, the space provided in the recess 7 may be used by physically moving the antenna further from the conductive material. Thus, in one embodiment the antenna may be located against the housing 3 except that part of the antenna near fastener 10 is instead located against the inner surface of the flange i.e. a surface which is as far away as possible from the fastener 10.

By making use of a flange such as flange 5, the invention allows a larger antenna (and thus one which has an effective, or a more effective, working range) to be provided. Antenna area relates to near field communication field range. Thus the problem with the jack example referred to above is getting the antenna areas to be large enough in a removable near field communication jack device within the constraints of existing seat cut-outs which are typically much smaller. The solution in that example is to attach, or build the antenna into, the locking flange 5 of the jack.

Being able to attach the antenna externally has the advantage that existing equipment can be easily retrofitted with near field communications capability. Similarly, the present invention can be easily replaced even if access behind the panel or housing is difficult or impossible.

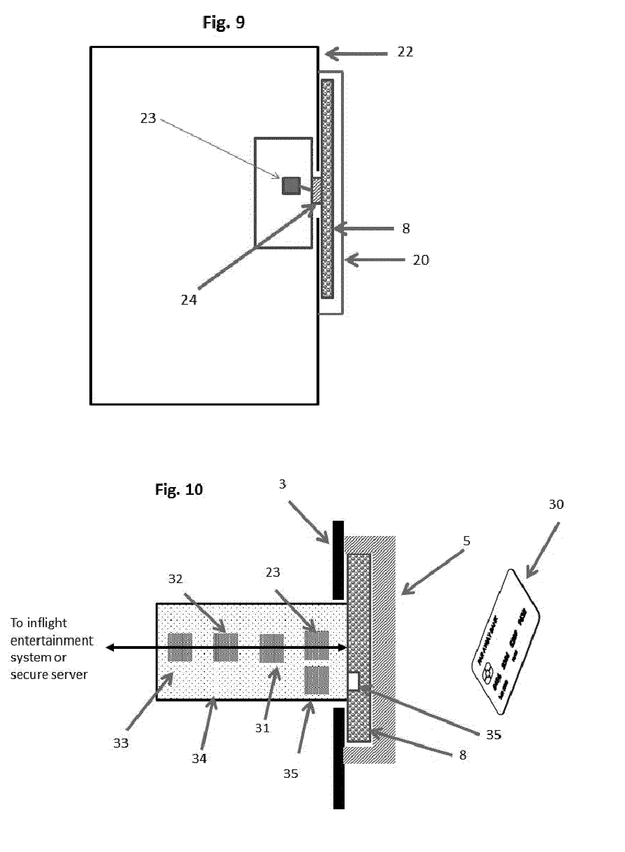

Referring to Figure 9, where near field communication capability might be installed into existing equipment (e.g. existing aircraft equipment or an existing personal computing device), a large antenna may be required to achieve an appropriate field range. Thus the antenna 8 may be provided on a carrier such as a cosmetic component 20 (e.g. a bezel or surround that fits about a VDU) which is mounted externally of the housing or panel 22 (e.g. the VDU housing or panel) as shown in Figure 9. The antenna 8 can be hidden on a rear side of the component 20 or embedded in the component 20. Embedding the antenna can be achieved using an adhesive layer as described above.

The cosmetic component 20 is preferably non-conductive (e.g. comprising a plastics material) so as to allow the transmission of an NFC transmission/reception field therethrough.

In the illustrated embodiment the apparatus comprises NFC circuitry comprising at least a tuning circuit 23 preferably provided internally within or behind the housing or panel 22 substantially adjacent the cosmetic component 20 and antenna 8. In another embodiment the antenna may be provided separate or remote from the near field circuitry (e.g. if space does not allow the circuitry to provided immediately adjacent the apparatus of the present invention), and may be connected by suitable conductors. In these cases the antenna is not a natural part of the near field communication circuitry including tuning circuit 23. The near field communication circuitry is therefore preferably detachable via connector 24 from the antenna near a cut-out as shown in Figure 9, to accommodate both possibilities.

Turning to Figure 10, an embodiment is shown by way of example for use of the invention in conjunction with an in-flight entertainment (IFE) system.

The apparatus, which may form a near field communication (NFC) transmitter master device, comprises NFC circuitry including a transmitter/receiver circuit 31 which captures information from a passive or active NFC slave device 30 such as a payment card (debit, credit, or stored-value contactless payment card for example) through a variety of proprietary or standard communication protocols. However the data format from the NFC slave device 30 is unlikely to be formatted to be easily readable by existing in-flight entertainment systems. Accordingly, there may be provided inside the NFC jack (or other apparatus) hardware running signal conversion software or circuitry 32 for digital transportation to/from the IFE system. Similarly, an NFC transmitter master device captures information from a passive or active NFC slave device 30 which may need encryption before being passed to an IFE system. Accordingly, there may also be provided hardware and/or software 33 running encryption algorithms inside the NFC master device.

The tuning circuit 23, transmitter/receiver circuit 31, signal conversion software/circuitry 32 and hardware/software encryption 33 may be implemented as a combination of discrete electronic components and one or more integrated circuits, which may include a microcontroller or programmable logic programmed to perform the required functions. The techniques for this are known to those skilled in the art of embedded systems. Each of the electronic components may be provided on a single printed circuit board (PCB) 34 coupled to the antenna, for example.

In an aircraft, electrical power relates to fuel consumption. Transmission devices such as NFC consume a relatively high amount of power. Where NFC is installed into many seats in an aircraft the power consumption is multiplied by the number of seats. It is therefore desirable to have the NFC dormant when not in use to minimise power and fuel consumption.

In one embodiment, as shown in Figure 10, a low power sensor 35 may be provided in the apparatus to sense when near field communication is required and thereby trigger activation of the antenna and NFC field. The sensor 35 may be adapted to detect proximity of an NFC device by vibration, movement, or capacitive change, for example. The sensor 35 may be incorporated into or onto a surface where the NFC antenna is installed to detect the presence of an NFC device or a user's hand holding the NFC device, and turn on the NFC field accordingly.

Alternatively, or additionally, activation of the antenna and NFC field may be triggered by the IFE system when a passenger requires NFC communication to take place, through specific interactions with the between the user and IFE system, typically via the VDU for example. This may comprise the use of a payment graphical user interface (GUI) displayed on the VDU activating the NFC field to enable contactless payment, or a pairing GUI activating the NFC field to enable automatic configuration or pairing of the IFE system with a wireless device for communication using a higher speed wireless communication standard such as Bluetooth^{®} or WiFi, for example.

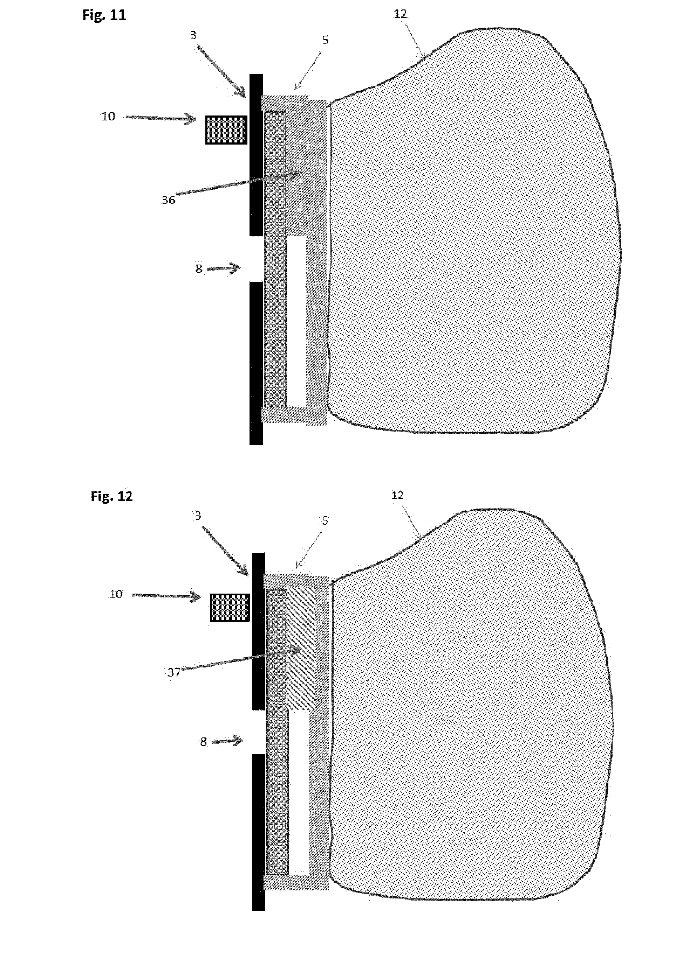

Referring next to Figure 11, the shape of the NFC transmission/reception field may alternatively or additionally be controlled by varying the thickness of the layer of dielectric material of the flange 5 which covers the antenna. In the embodiment shown in Figure 11, the layer is plastic and has an area of increased thickness 36 in order to produce a required shape of NFC transmission/reception field.

Another method of controlling NFC transmission/reception field shape is by providing a covering layer which comprises at least two different materials as shown in Figure 12, where at least some of the materials have different dielectric properties from others. In this way the outer layer may act as an electromagnetic "lens", altering the natural shape of the NFC transmission/reception field as it passes through the layers. In some embodiments the additional layer(s) 37 may be provided in localised areas only, rather than over the entire surface of the covering layer.

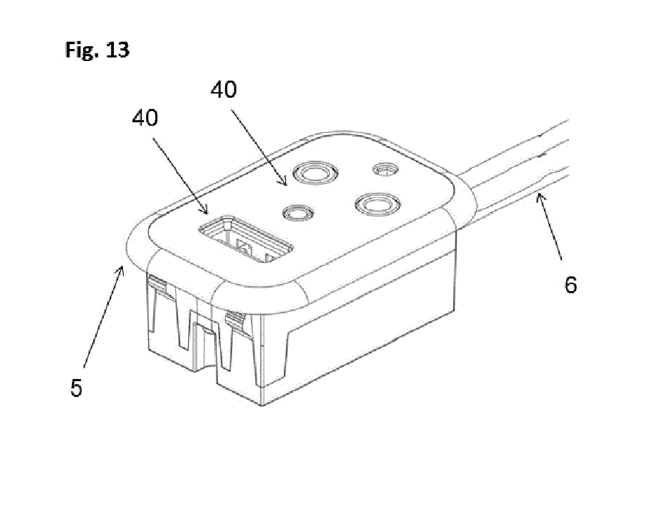

Finally, Figure 13 shows an isometric view of another embodiment of an apparatus according to the present invention, wherein the apparatus comprises an insert having not only an NFC antenna (hidden in the drawing), but also two additional jacks 40 in the front face 41 of the insert surrounded by flange 5. The antenna preferably comprises a loop in the flange 5 which encircles the additional jacks 40. In this example the respective jacks 40 are adapted to receive a universal serial bus (USB) connector plug and a standard three-pin aircraft audio connector plug. However, in other embodiments any one or more additional jacks adapted for receiving any type of connector plug may alternatively be used. The plugs are thus received through the second portion and past the cut-out into the first portion of the apparatus to obtain a wired connection between the IFE system and an electronic device for either data communication or power, while the antenna provides NFC capabilities.

As previously described, the apparatus may further comprise electromagnetic absorbent or reflective materials, a variable-thickness protective cover layer, a plurality of layers of materials having different dielectric properties, and/or an asymmetric antenna, to compensate for any conductors in the additional jacks.

From the foregoing it will be seen that a near field communication apparatus is provided which comprises a flange to allow a larger antenna than otherwise possible within the limited area of a cut-out. The flange thus serves the purposes of providing not only a clean cosmetic finish and securing the apparatus in place, but also concealing and protecting an antenna with improved range. The apparatus is particularly suitable for retrofitting to aircraft to interface with existing IFE systems, or fitting to an aircraft upon initial installation of the IFE system to facilitate straightforward future upgrades of passenger data communication interfaces.

Unless the context clearly requires otherwise, throughout the description, the words "comprise", "comprising", and the like, are to be construed in an inclusive sense as opposed to an exclusive or exhaustive sense, that is to say, in the sense of "including, but not limited to". Where reference has been made to specific components or integers of the invention having known equivalents, then such equivalents are herein incorporated as if individually set forth.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Where in the foregoing description, reference has been made to specific components or integers of the invention having known equivalents, then such equivalents are herein incorporated as if individually set forth.

Although this invention has been described by way of example and with reference to possible embodiments thereof, it is to be understood that modifications or improvements may be made thereto without departing from the spirit or scope of the invention. In particular, an additional jack, connector, display, or other electronic device for the use of a passenger or other user may be provided substantially centrally in the second portion of the apparatus within the flange on the exterior side of the housing or panel, and potentially extending inwardly through the cut-out, whereby the apparatus may provide additional functionality in addition to near field communication.

## Claims

1. A near field communication (NFC) apparatus comprising an insert for installation in a cut-out of a panel or housing, the insert comprising a first portion adapted to extend through the cut-out and a second portion comprising a flange adapted to abut the panel or housing adjacent the cut-out, wherein the flange comprises an NFC antenna.

2. The NFC apparatus of claim 1 further comprising a jack for receiving a plug in or through at least the second portion of the apparatus for wired connection with an electronic device.

3. The NFC apparatus of claim 1 or claim 2 wherein the second portion comprises an outer layer of plastics material provided over the antenna.

4. The NFC apparatus of claim 3 wherein the thickness of the plastics material over the antenna is non-uniform and selected such that a resultant varied material dielectric has a desired effect on a shape of a transmission/reception field of the antenna.

5. The NFC apparatus of any one of claims 3 to 5, wherein the second portion comprises a plurality of layers of plastics materials provided over at least part of the antenna, wherein at least one of said plurality of plastics materials comprises a material having a dielectric property which differs from at least one other of the plurality of plastics materials.

6. The NFC apparatus of claim 5 wherein the type, shape and/or position of one or more of the plurality of layers of plastics materials are selected to have a desired effect on a shape of a transmission/reception field of the antenna.

7. The NFC apparatus of any one of claims 1 to 6, wherein the first portion comprises a connector or cable coupled to the antenna to allow connection of the antenna to NFC circuitry provided behind or within the panel or housing.

8. The NFC apparatus of any one of claims 1 to 6, wherein the insert comprises NFC circuitry coupled to the antenna.

9. The NFC apparatus of any one of claims 1 to 8, further comprising a proximity sensor adapted to detect the presence of an NFC device and selectively activate the antenna to reduce power consumption.

10. The NFC apparatus of any one of claims 1 to 9 wherein the second portion further comprises an electromagnetic absorbent or reflective material on or adjacent to the antenna in order to modify an induced magnetic field in the vicinity of a conductor.

11. The NFC apparatus of any one of any one of claims 1 to 10, wherein the antenna comprises a loop antenna and a diameter of the loop antenna is greater than a corresponding diameter of the cut-out.

12. The NFC apparatus of any one of claims 1 to 11, wherein the antenna is shaped to compensate for an effect of a conductor which may affect a transmission/reception field of the antenna.

13. The NFC apparatus of claim 12 wherein the antenna is asymmetric in terms of one or more of the shape or position of one or more loops of the antenna.

14. The NFC apparatus of claim 12 or claim 13, wherein conductive paths of the antenna are one or more of increased, widened, or more widely spaced apart in selected regions of the antenna so as to increase or reduce the available field to compensate for the conductor.

15. The NFC apparatus of any one of claims 1 to 14, adapted for installation in an aircraft and connection with an in-flight entertainment (IFE) system, wherein the panel or housing comprises a visual display unit housing, cabin panel, seat, or armrest accessible to a passenger.
